# EUROPÄISCHE PATENTSCHRIFT

(11) **EP 3 303 867 B1**
(45) Veröffentlichungstag und Bekanntmachung des Hinweises auf die Patenterteilung: **20.03.2019**
(21) Anmeldenummer: 16729765.4
(22) Anmeldetag: 23.05.2016
(51) Int. Cl.: F16D 48/02

(54) **HYDRAULIKSYSTEM MIT PUMPENVERLUSTENMINIMIERENDER KUPPLUNGSBETÄTIGUNG**
HYDRAULIC SYSTEM COMPRISING PUMP-LOSS-MINIMISING CLUTCH ACTUATION
SYSTÈME HYDRAULIQUE À ACTIONNEMENT DE L'EMBRAYAGE MINIMISANT LES PERTES DE LA POMPE

(30) Priorität: 02.06.2015 DE 102015210167
(43) Veröffentlichungstag der Anmeldung: 11.04.2018
(73) Patentinhaber: Schaeffler Technologies AG & Co. KG, 91074 Herzogenaurach (DE)
(72) Erfinder: OSSADNIK, Thomas, 16547 Birkenwerder (DE); PALMEN, André, 76228 Karlsruhe (DE)
(86) Internationale Anmeldenummer: PCT/DE2016/200243
(87) Internationale Veröffentlichungsnummer: WO 2016/192723

(56) Entgegenhaltungen:
- WO-A1-03/040580
- DE-A1-102005 006 431
- DE-A1-102012 202 162

## Beschreibung

Die Erfindung betrifft ein Hydrauliksystem zum Versorgen eines hydraulischen Kupplungsaktors mit Druckfluid, mit einem Leitungsverbund, der an eine Hydraulikpumpe angeschlossen ist oder anschließbar ist, wobei der Leitungsverbund zum Fluidleiten des von der Hydraulikpumpe unter Druck setzbaren Druckfluids zum Kupplungsaktor vorbereitet ist.

Aus dem Stand der Technik sind bereits druckhaltende Getriebekupplungen bekannt, etwa solche mit Kugelventilen. So offenbart bspw. die DE 11 2012 004 030 T5 eine Kugelventilbaugruppe für eine Kupplung, enthaltend, ein ringförmiges Ringelement, das einen ersten Teil enthält, mit einem ersten Kanal, der vollständig von dem ersten Teil umschlossen ist, einer ersten Durchgangsbohrung zwischen einer radial innenliegenden Fläche des ersten Teils und dem ersten Kanal, einer zweiten Durchgangsbohrung zwischen einer radial außenliegenden Fläche des ersten Teils mit dem ersten Kanal. Die Baugruppe enthält eine erste Druckregelbaugruppe, die zumindest teilweise innerhalb des ersten Kanals angeordnet ist und enthält eine Fassung, die axial innerhalb des ersten Kanals verschiebbar ist und ein von der Fassung umschlossenes Volumen enthält, ferner eine erste Kugel, die innerhalb des Volumens und des ersten Kanals angeordnet ist, und eine erste Feder, die mit der Fassung verbunden ist. Die Fassung ist so angeordnet, dass sie als Reaktion auf einen Hydraulikdruck einer ersten Durchgangsbohrung und eine durch die erste Feder ausgeübte axiale Kraft axial verschoben wird, um die erste Kugel so zu verschieben, dass diese einen Flüssigkeitsstrom zwischen der ersten und der zweiten Durchgangsbohrung sperrt oder frei gibt.

Es sind jedoch auch Fluidsysteme und Verfahren zum Betätigen einer Kupplung bekannt. So offenbart bspw. die DE 10 2014 214 203 A1 ein Fluidsystem zum Betätigen einer Kupplung, mit einer Kupplungsbetätigungseinrichtung, die mit einer durch einen Antrieb angetriebenen Fluidpumpe in fluidischer Wirkverbindung steht. Es ist als besonders herausgestellt worden, dass dem Antrieb der Fluidpumpe eine Bremseinrichtung zugeordnet ist.

Aus der deutschen Offenlegungsschrift DE 10 2012 202 162 A1 ist ein Fluidsystem bekannt, welches einen nahe einer Kupplung angeordneten hydraulischen Arbeitszylinder, der über eine hydraulische Leitung mit einer Volumenstromquelle verbunden ist, betätigen kann. Der Volumenstrom dieser Volumenstromquelle ist durch eine Steuereinheit in Abhängigkeit von Signalen der dem Fluidsystem zugeordneten Sensoren beeinflussbar. Die Volumenstromquelle ist durch eine in einem gemeinsamen Gehäuse angeordnete Kombination aus einem Elektromotor und einer Pumpe gebildet. Weiterhin kann die Steuereinheit ein Steuerventil derart umschalten, dass ein im Steuerventil vorhandenes Sitzventil ein Rückfließen des Hydraulikmediums verhindert und die Pumpe somit nicht arbeiten muss.

Die Erfindung betrifft letztlich ein solches Hydrauliksystem, das für alle Kupplungen, insbesondere Einfach- und Doppelkupplungen anwendbar ist. Insbesondere soll sie zum Einsatz bei Lamellenkupplungen geeignet sein. Um eine Lamellenkupplung zu betätigen, wird üblicherweise ein Drucktopf mit einem Hydraulikdruck beaufschlagt, sodass der Drucktopf axial verfährt und eine Kraft auf ein Lamellenpaket, das in der Lamellenkupplung eingesetzt ist, ausübt. Dazu muss der Hydraulikdruck, der auf den Drucktopf wirkt, die ganze Zeit aufrecht erhalten werden. Eine zum Druck aufbringen eingesetzte Pumpe, die den Hydraulikdruck bereitstellt, hat jedoch immer eine gewisse Leckage, was zu Verlusten führt. Üblicherweise muss dann die Pumpe immer hohen Druck erzeugen, um die Leckage zu kompensieren. Dies ist nicht energieeffizient.

Es ist die Aufgabe der vorliegenden Erfindung, die Nachteile aus dem Stand der Technik zu vermeiden, und insbesondere ein Hydrauliksystem bereitzustellen, das die Verluste der Pumpe reduziert.

Dies wird erfindungsgemäß dadurch gelöst, dass der Leitungsverbund einen ersten Leitungsast mit einem Rückschlagventil und einen zweiten zum ersten Leitungsast parallelen Leitungsast aufweist, wobei im zweiten Leitungsast ein in Abhängigkeit vom Druck im ersten Leitungsast zumindest zwischen einer den zweiten Leitungsast öffnenden und verschließenden Stellung hin- und herschaltbaren Ventil angeordnet ist.

Die Grundidee ist also ein System, das den maximal notwendigen Hydraulikdruck nur am Anfang kurzzeitig aufbaut und anschließend durch eine geeignete Verschaltung von Ventilen einen Abbau des Drucks verhindert, sodass die Pumpe weniger arbeiten muss und somit die Verluste minimiert werden.

Vorteilhafte Ausführungsformen sind in den Unteransprüchen beansprucht und werden nachfolgend näher erläutert.

So ist es von Vorteil, wenn vom ersten Leitungsast zum Ventil eine Steuerleitung führt, die so an dem Ventil angreift, dass ein in der Steuerleitung herrschender Auslösedruck / Ventilbetätigungsdruck zum Verschließen des zweiten Leitungsasts führt. Auf diese Weise kann bei Abfall des von der Pumpe zur Verfügung gestellten Druckes (p1 / Pumpdruck) ein selbstständiges Verschließen des zweiten Leitungsasts, bei schon verschlossenem ersten Leitungsast bewirkt werden. Bei entsprechend geschickter Einstellung des Rückschlagventils und des Ventils im zweiten Leitungsasts, etwa eines Schaltventils, wird es ermöglicht einen hohen Druck im Druckraum, der zuvor aufgebaut wurde, zu erhalten, wobei nur ein vergleichsweise geringer Druck erforderlich ist, um das Ventil in einem gesperrten Zustand zu halten. Ein weiteres Absenken des Drucks soll den gesperrten Zustand wieder aufheben und somit ein Öffnen der Kupplung ermöglichen.

Es ist auch von Vorteil, wenn das Rückschlagventil so abgestimmt ist, dass es als Reaktion auf einen Druck in dem ersten Leitungsast auf Seiten der Pumpe den Durchlass in den ersten Leitungsast frei gibt, der größer als der für eine Betätigung einer Kraftfahrzeugkupplung nötiger Kupplungsbetätigungsdruck ist. Somit wird ein Hydrauliksystem ermöglicht, das zur Betätigung eines Drucktopfs einer Lamellenkupplung einsetzbar ist, wobei der Druck p1 dabei den von der Pumpe bereitgestellten Druck referenziert und bei einem Druck p2, der den Kupplungsbetätigungsdruck referenziert, es sich um den notwendigen Betätigungsdruck im Druckraum der Kupplung handelt.

Es ist zweckmäßig, wenn die Einzelkomponenten des Systems so aufeinander abgestimmt sind, dass der Ventilbetätigungsdruck kleiner als der Kupplungsbetätigungsdruck ist. Ein Halten des Drucks auf hohem Niveau, obwohl die Pumpe nicht mehr läuft, ist dann effizient erreichbar. Um die Kosten niedrig zu halten, hat es sich bewährt, wenn das Ventil als Zwei/Zwei-Wege-Ventil ausgeführt ist.

Insbesondere ist es von Vorteil, wenn das Ventil als Schieberventil, etwa mit Dichtungen ausgestattet ist.

Um ein besonders gutes Schalten zu ermöglichen, ist es von Vorteil, wenn das Ventil derart (feder-)vorgespannt ist, dass es bei Fehlen eines auf das Ventil betätigend einwirkenden Druckes von größer gleich des Ventilbetätigungsdrucks in eine den zweiten Leitungsast geöffnete Stellung gezwungen ist / wird.

Für ein Kontrollieren des Schaltverhaltens ist es von Vorteil, wenn ein Druckmessgerät in den Leitungsverbund eingebunden ist.

Dabei hat es sich als zweckmäßig herausgestellt, wenn das Druckmessgerät am zweiten Leitungsast angeschlossen ist. Das Druckmessgerät kann natürlich auch am ersten Leitungsast angeschlossen sein. Von Vorteil ist der Anschluss auf der Kupplungsseite der Ventile.

Die Erfindung betrifft auch ein Verfahren zum Betätigen eines hydraulischen Kupplungsaktors, wobei eine Pumpe eines Hydrauliksystems, etwa der erfindungsgemäßen Art, mit einem Kupplungsbetätigungsdruck versorgt und bei Abfall eines von der Pumpe gelieferten Pumpdrucks unter den Kupplungsbetätigungsdruck ein Rückschlagventil eines ersten Leitungsasts geöffnet wird, und bei weitergehendem Abfall des Pumpdrucks unter einen Ventilbetätigungsdruck, der kleiner als der Kupplungsbetätigungsdruck sein kann, ein zum ersten Leitungsast paralleler zweiter Leitungsast durch das Ventil geöffnet wird.

Mit anderen Worten besteht das Hydrauliksystem aus einem verschaltfreien Rückschlagventil und einem Zwei/Zwei-Wege-Ventil in Schieberbauart und mit Dichtungen. Das Zwei/Zwei-Wege-Ventil wird dabei durch den Hydraulikdruck, den die Pumpe erzeugt, betätigt und sollte bei einem deutlich geringeren Druck als dem zum vollständigen Verschließen erforderlichen Betätigungsdruck der Kupplung ansprechen.

Zum Betätigen der Kupplung fördert die Pumpe Öl über das Zwei/Zwei-Wege-Ventil und das Rückschlagventil in die Kupplung. Durch den sich aufbauenden Druck wird das Zwei/Zwei-Wege-Ventil in die gesperrte Position gebracht und das Öl gelangt nur noch über das Rückschlagventil in den Druckraum der Kupplung. Ist der notwendige Betätigungsdruck erreicht, kann die Pumpe ihr Fördervolumen reduzieren, was zu einer Absenkung des Drucks führt, der geringfügig größer sein sollte, als der Druck, der zum Betätigen des Zwei/Zwei-Wege-Ventils erforderlich ist.

Das Rückschlagventil und der gesperrte Durchfluss im Zwei/Zwei-Wege-Ventil verhindern einen Abbau des Drucks im Druckraum der Kupplung. Gegebenenfalls kann druckraumseitig ein Druckmessgerät installiert sein, um den Druck zu überwachen, da sich dieser durch Leckage abbauen kann. Eventuell müsste die Pumpe den Druck p2 wieder korrigieren. Zum Öffnen der Kupplung reicht es, die Pumpe anzuhalten. Über die Leckage der Pumpe sinkt der Druck p1 unmittelbar ab, da die Kapazität sehr klein ist, sodass das Zwei/Zwei-Wege-Ventil in seine Ausgangsposition verfährt und ein Zurückfließen des Öls erlaubt.

Es wird somit ein Hydrauliksystem zum Betätigen von Kupplungen vorgeschlagen, wobei der Energieverbrauch der Pumpe reduziert werden wird, indem der Druck im Druckraum nicht die ganze Zeit konstant gehalten werden muss, sondern nur einmal kurzzeitig aufgebaut wird und anschließend wieder sinken kann. Durch eine geeignete Verschaltung von Ventilen, wird ein Druckabbau verhindert, wobei der Druck der Pumpe deutlich reduziert werden kann.

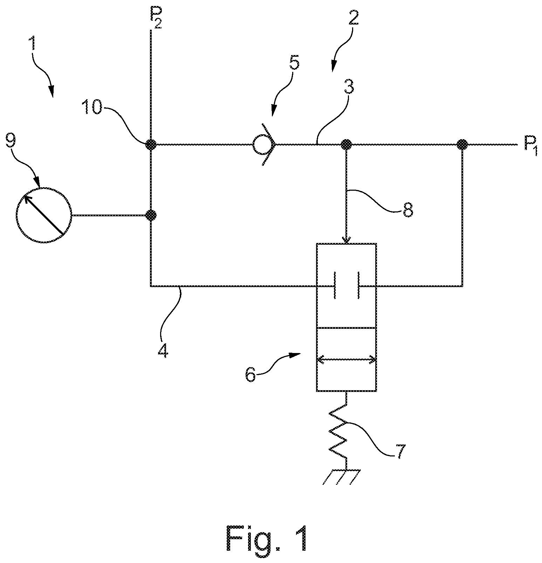

Die Erfindung wird nachfolgend mit Hilfe einer Figur näher erläutert. Es zeigt dabei die Fig. 1 eine erste Ausführungsform eines erfindungsgemäßen Hydrauliksystems in schematischer Darstellung.

Diese schematische Darstellung dient nur dem Verständnis der Erfindung.

In der Fig. 1 ist ein erfindungsgemäßes Hydrauliksystem 1 dargestellt. Auf Seiten eines nicht dargestellten hydraulischen Kupplungsaktors ist ein Kupplungsbetätigungsdruck p2 aufzubringen, also ein solcher Druck, der notwendig ist, um eine Betätigung der Kupplung auf Seiten des Druckraums zu bewirken. Die Kupplung selber ist ebenfalls nicht dargestellt.

Das Hydrauliksystem 1 weist einen Leitungsverbund 2 auf, der an einem Ende eine nicht dargestellte Hydraulikpumpe aufweist, die einen Pumpdruck p1 zur Verfügung stellt. Das von der Hydraulikpumpe unter Druck gesetzte Hydraulikfluid, wie eine Flüssigkeit, etwa Öl, wird durch den Leitungsverbund 2, nämlich einen ersten Leitungsast 3 und/oder einen zweiten Leitungsast 4 in Richtung des nicht dargestellten Kupplungsaktors gefördert. Im ersten Leitungsast 3 ist ein Rückschlagventil 5 derart angeordnet, dass es bei Abfall des Druckes p1 unter den Wert von p2 den Durchgang verschließt.

Im zweiten Leitungsast 4 ist ein Ventil 6, nämlich ein Schieberventil eingesetzt. Das Ventil 6 ist als Zwei/Zwei-Wege-Ventil in Schieberbauart und mit Dichtungen ausgebildet. Es ist durch eine Feder 7 vorgespannt und wird über eine von dem ersten Leitungsast 3 abzweigenden Steuerleitung 8 angesteuert. Ein durch die Steuerleitung 8 zur Verfügung gestellter Druck wirkt der durch die Feder 7 zur Verfügung gestellten Federkraft entgegen. Ist der in der Steuerleitung 8 herrschende Druck, nämlich ein Auslösedruck, geringer, als der Betätigungsdruck im Druckraum der Kupplung, aber höher als ein bspw. von der Pumpe zur Verfügung gestellter Druck p1, so wird das Ventil 6 in die in Fig. 1 dargestellte Position, also eine den zweiten Leitungsast 4 verschließende Position verschoben. Es ist also entscheidend, wie die drei Drücke aufeinander abgestimmt sind.

Im ersten Leitungsast 3 ist das Rückschlagventil 5 dann verschlossen, wenn der Druck p1 geringer als p2 ist.

Ein Druckmessgerät 9 ist am zweiten Leitungsast 4, vor einem Zusammenfluss 10 vom ersten Leitungsast 3 und zweiten Leitungsast 4, eingebunden.

Das Druckmessgerät 9 ist somit druckraumseitig installiert. Das Ventil 6 ist in seiner Ausgangsposition im durchflussermöglichenden Zustand, wohingegen es im betätigten Zustand gesperrt ist. Der Auslöse- / Ventilbetätigungsdruck ist deutlich unter p2. Das Ventil 6 wird durch den Druck p1 betätigt.

### Bezugszeichenliste

- 1: Hydrauliksystem
- 2: Leitungsverbund
- 3: erster Leitungsast
- 4: zweiter Leitungsast
- 5: Rückschlagventil
- 6: Ventil
- 7: Feder
- 8: Steuerleitung
- 9: Druckmessgerät
- 10: Zusammenfluss

## Patentansprüche

1. Hydrauliksystem (1) zum Versorgen eines hydraulischen Kupplungsaktors mit Druckfluid, mit einem Leitungsverbund (2), der an eine Hydraulikpumpe angeschlossen ist, wobei der Leitungsverbund (2) zum Fluidleiten des von der Hydraulikpumpe unter Druck setzbaren Druckfluids zum Kupplungsaktor vorbereitet ist, **dadurch gekennzeichnet, dass** der Leitungsverbund (2) einen ersten Leitungsast (3) mit einem Rückschlagventil (5) und einen zweiten zum ersten Leitungsast (3) parallelen Leitungsast (4) aufweist, wobei im zweiten Leitungsast (4) ein, in Abhängigkeit vom Druck im ersten Leitungsast (3), zumindest zwischen einer den zweiten Leitungsast (4) öffnenden und verschließenden Stellung, hin- und herschaltbares Ventil (6) angeordnet ist.

2. Hydrauliksystem (1) nach Anspruch 1, **dadurch gekennzeichnet, dass** vom ersten Leitungsast (3) zum Ventil (6) eine Steuerleitung (8) führt, die so an dem Ventil (6) angreift, dass ein in der Steuerleitung (8) herrschender Ventilbetätigungsdruck zum Verschließen des zweiten Leitungsasts (4) führt.

3. Hydrauliksystem (1) nach einem der Ansprüche 1 oder 2, **dadurch gekennzeichnet, dass** das Rückschlagventil (5) so abgestimmt ist, dass es ab einem Druck in dem ersten Leitungsast (3) auf Seiten der Pumpe den Durchlass in den ersten Leitungsast (3) frei gibt, wenn der Druck größer als der für eine Betätigung einer Kraftfahrzeugkupplung nötige Kupplungsbetätigungsdruck (p2) ist.

4. Hydrauliksystem (1) nach Anspruch 3, **dadurch gekennzeichnet, dass** die Einzelkomponenten des Systems so aufeinander abgestimmt sind, dass der Ventilbetätigungsdruck kleiner als der Kupplungsbetätigungsdruck ist.

5. Hydrauliksystem (1) nach einem der Ansprüche 1 bis 4, **dadurch gekennzeichnet, dass** das Ventil (6) als Zwei/Zwei-Wege-Ventil ausgeführt ist.

6. Hydrauliksystem (1) nach einem der Ansprüche 1 bis 5, **dadurch gekennzeichnet, dass** das Ventil (6) als Schieberventil ausgestattet ist.

7. Hydrauliksystem (1) nach einem der Ansprüche 1 bis 6, **dadurch gekennzeichnet, dass** das Ventil (6) derart vorgespannt ist, dass es beim Fehlen eines auf es betätigend einwirkenden Druckes von größer gleich des Ventilbetätigungsdrucks in eine den zweiten Leitungsast (4) öffnende Stellung gezwungen ist.

8. Hydrauliksystem (1) nach einem der Ansprüche 1 bis 7, **dadurch gekennzeichnet, dass** ein Druckmessgerät (9) in den Leitungsverbund (2) eingebunden ist.

9. Hydrauliksystem (1) nach Anspruch 8, **dadurch gekennzeichnet, dass** das Druckmessgerät (9) kupplungsseitig des Rückschlagventils (5) und/oder des Ventils (6) angeschlossen ist.

10. Verfahren zum Betätigen eines hydraulischen Kupplungsaktors mittels eines Hydrauliksystems (1) nach einem der Ansprüche 1 bis 9, wobei eine Pumpe eines Hydrauliksystems (1) mit einem Kupplungsbetätigungsdruck (p2) versorgt wird und bei Abfall eines von der Pumpe gelieferten Pumpdrucks (p1) unter den Kupplungsbetätigungsdruck (p₂) der erste Leitungsast (3) durch das Rückschlagventil (5) verschlossen wird, und bei weitergehendem Abfall des Pumpdrucks (p1) unter einen Ventilbetätigungsdruck, der zum ersten Leitungsast (3) parallele zweite Leitungsast (4) durch das Ventil (6) geöffnet wird.

## Claims

1. Hydraulic system (1) for supplying pressurized fluid to a hydraulic clutch actuator, having a line assembly (2) which is connected to a hydraulic pump, wherein the line assembly (2) is configured for conducting the pressurized fluid, which can be pressurized by the hydraulic pump, to the clutch actuator, **characterized in that** the line assembly (2) has a first line branch (3) with a check valve (5) and has a second line branch (4) which is parallel with respect to the first line branch (3), wherein, in the second line branch (4), there is arranged a valve (6) which is switchable back and forth, at least between a position in which it opens the second line branch (4) and a position in which it closes the second line branch (4), in a manner dependent on the pressure in the first line branch (3) .

2. Hydraulic system (1) according to Claim 1, **characterized in that** a control line (8) leads from the first line branch (3) to the valve (6), which control line acts on the valve (6) such that a valve actuating pressure prevailing in the control line (8) leads to the closure of the second line branch (4) .

3. Hydraulic system (1) according to either of Claims 1 and 2, **characterized in that** the check valve (5) is adapted such that, above a pressure in the first line branch (3) at the side of the pump, said check valve opens up the passage into the first line branch (3) if the pressure is higher than the clutch actuating pressure (p2) required for an actuation of a vehicle clutch.

4. Hydraulic system (1) according to Claim 3, **characterized in that** the individual components of the system are coordinated with one another such that the-valve actuating pressure-is -lower than the clutch actuating pressure.

5. Hydraulic system (1) according to any of Claims 1 to 4, **characterized in that** the valve (6) is designed as a two/two directional valve.

6. Hydraulic system (1) according to any of Claims 1 to 5, **characterized in that** the valve (6) is designed as a slide valve.

7. Hydraulic system (1) according to any of Claims 1 to 6, **characterized in that** the valve (6) is preloaded such that, when no pressure higher than or equal to the valve actuating pressure acts with actuating action on said valve, said valve is forced into a position which opens the second line branch (4) .

8. Hydraulic system (1) according to any of Claims 1 to 7, **characterized in that** a pressure measuring unit (9) is incorporated into the line assembly (2).

9. Hydraulic system (1) according to Claim 8, **characterized in that** the pressure measuring unit (9) is connected at the clutch side of the check valve (5) and/or of the valve (6).

10. Method for actuating a hydraulic clutch actuator by means of a hydraulic system (1) according to any of Claims 1 to 9, wherein a pump of a hydraulic system (1) is supplied with a clutch actuating pressure (p2) and, in the event that a pump pressure (p1) provided by the pump falls below the clutch actuating pressure (p2), the first line branch (3) is closed by the check valve (5), and in the event that the pump pressure (p1) falls more extensively below a valve actuating pressure, the second line branch (4), which is parallel to the first line branch (3), is opened by the valve (6).

## Revendications

1. Système hydraulique (1) destiné à alimenter un actionneur hydraulique d'embrayage en fluide sous pression, et présentant un ensemble (2) de conduits raccordé à une pompe hydraulique, l'ensemble (2) de conduits étant prévu pour conduire vers l'actionneur d'embrayage le fluide sous pression mis sous pression par la pompe hydraulique,
**caractérisé en ce que**
l'ensemble (2) de conduits présente une première branche (3) dotée d'une soupape anti-retour (5) et une deuxième branche (4) parallèle à la première branche (3), une soupape (6) apte à basculer en va-et-vient au moins entre une position d'ouverture et une position de fermeture de la deuxième branche (4) en fonction de la pression qui règne dans la première branche (3) est disposée dans la deuxième branche (4).

2. Système hydraulique (1) selon la revendication 1, **caractérisé en ce qu'**un conduit pilote (8) qui engage la soupape (6) de telle sorte que la pression d'actionnement de la soupape qui règne dans le conduit pilote (8) entraîne la fermeture de la deuxième branche (4) relie la première branche (3) à la soupape (6).

3. Système hydraulique (1) selon l'une des revendications 1 ou 2, **caractérisé en ce que** la soupape anti-retour (5) est réglée de telle sorte qu'elle libère le passage dans la première branche (3) dès que la pression qui règne du côté de la pompe dans la première branche (3) est supérieure à la pression d'actionnement d'embrayage nécessaire pour actionner l'embrayage du véhicule automobile.

4. Système hydraulique (1) selon la revendication 3, **caractérisé en ce que** les différents composants du système sont accordés les uns aux autres de telle sorte que la pression d'actionnement de la soupape soit inférieure à la pression d'actionnement de l'embrayage.

5. Système hydraulique (1) selon l'une des revendications 1 à 4, **caractérisé en ce que** la soupape (6) est configurée comme soupape à deux/deux voies.

6. Système hydraulique (1) selon l'une des revendications 1 à 5, **caractérisé en ce que** la soupape (6) est configurée comme soupape à coulisseau.

7. Système hydraulique (1) selon l'une des revendications 1 à 6, **caractérisé en ce que** la soupape (6) est précontrainte de telle sorte qu'elle est forcée dans une position qui ouvre la deuxième branche (4) si la pression d'actionnement n'est pas supérieure ou égale à la pression d'actionnement de la soupape.

8. Système hydraulique (1) selon l'une des revendications 1 à 7, **caractérisé en ce que** un appareil (9) de mesure de pression est intégré dans l'ensemble (2) de conduits.

9. Système hydraulique (1) selon la revendication 8, **caractérisé en ce que** l'appareil (9) de mesure de pression est raccordé du côté embrayage de la soupape anti-retour (5) et/ou de la soupape (6).

10. Procédé d'actionnement d'un actionneur hydraulique d'embrayage au moyen d'un système hydraulique (1) selon l'une des revendications 1 à 9, dans lequel une pompe d'un système hydraulique (1) est alimentée en une pression (p2) d'actionnement d'embrayage et dans lequel la première branche (3) est fermée par la soupape anti-retour (5) au cas où la pression (p1) délivrée par la pompe chute en dessous de la pression (p2) d'actionnement de l'embrayage et la deuxième branche (4) parallèle à la première branche (3) est ouverte par la soupape (6) si la chute de la pression (p1) délivrée par la pompe se poursuit jusqu'en dessous d'une pression d'actionnement de la soupape.
